# EUROPÄISCHE PATENTANMELDUNG

(11) **EP 0 609 890 A1**
(43) Veröffentlichungstag der Anmeldung: **10.08.1994**
(21) Anmeldenummer: 94101694.1
(22) Anmeldetag: 04.02.1994
(51) Int. Cl.: B60N 2/28

(54) **Kindersicherheitssitz für Fahrzeuge**

(30) Priorität: 04.02.1993 DE 4303247
(71) Anmelder: OSANN DESIGN ENTWICKLUNGS- UND PRODUKTIONS-GmbH, KINDERSICHERHEITSSYTEME, D-78244 Gottmadingen (DE)
(72) Erfinder: Wurster, Fritz W., D-73550 Waldstetten (DE); Osann, Stephan, D-78244 Gottmadingen (DE)
(74) Vertreter: Hilleringmann, Jochen, Dipl.-Ing.

(57) **Zusammenfassung**

Der Kindersicherheitssitz (10) ist mit einem Sockel (14) versehen, auf dem eine Sitzschale (12) ruht. Zum Festlegen des Kindersicherheitssitzes (10) an dem Dreipunkt-Anschnallgurt (26,28) eines Fahrzeuges ist an der Sitzschale (12) eine Klemmvorrichtung (32) ausgebildet. Die Klemmvorrichtung (32) besteht aus einem feststehenden Klemmabschnitt (36), auf dem bei angeschnalltem Kindersicherheitssitz der Schultergurt (26) des Fahrzeug-Anschnallgurtes aufliegt. Gegen den sich über den Klemmabschnitt (36) erstreckenden Schultergurt (26) ist ein Klemmelement (34) bewegbar. Bei in seiner Klemmposition befindlichem Klemmelement (34) ist der Schultergurt (26) in seinem sich durch die Klemmvorrichtung (32) hindurch erstreckenden Bereich umgelenkt, wodurch die Haltekraft bei auf den Schultergurt (26) wirkenden Zugbeanspruchungen, wie dies bei plötzlichen Verzögerungen der Fall ist, verbessert ist.

## Beschreibung

Die Erfindung betrifft einen Kindersicherheitssitz mit einem Sockel, einer Sitzschale, die mit dem Sockel verbunden ist, und einer Klemmvorrichtung zum klemmenden Festlegen der Sitzschale und/oder des Sockels an einem Anschnallgurt, insbesondere einem Dreipunkt-Anschnallgurt eines Kraftfahrzeuges.

Derartige Kindersicherheitssitze zum Anschnallen an dem Anschnallgurt eines Fahrzeuges sind in den vielfältigsten Ausgestaltungen bekannt. So zeigt beispielsweise EP 0 331 299 A2 einen Kindersicherheitssitz mit einer Sitzschale, die an einer Platte drehbar befestigt ist. In der rückwärtigen Seite der Sitzschalen-Rückenlehne ist mindestens ein Haltebügel integriert, der im Abstand zur Rückenlehne verläuft und an seinem oberen und unteren Ende mit der Sitzschale einstückig verbunden ist. Zwischen dem mindestens einen Haltebügel und der Rückenlehne der Sitzschale wird der Fahrzeug-Anschnallgurt, bei dem es sich um einen Beckengurt handelt, hindurchgeführt.

Aus DE 88 08 637 U1 und DE 41 08 660 C1 sind Kindersicherheitssitze bekannt, bei denen der Schultergurt eines Fahrzeug-3-Punkt-Anschnallgurts an der Rückenlehne geführt bzw. festgeklemmt ist, während der Beckengurt des 3-Punkt-Gurtes durch den Sockel hindurchgeführt ist. Während bei dem Kindersicherheitssitz nach DE 88 08 637 U1 der Schultergurt lediglich an der Rückenlehne geführt ist, wird der bei dem Kindersicherheitssitz nach DE 41 08 660 C1 mittels einer Klemmvorrichtung an der Rückenlehne der Sitzschale geklemmt gehalten. Die Ver- und Entriegelung der Klemmvorrichtung ist bei diesem Kindersicherheitssitz mit der Ver- und Entriegelung des Verstellmechanismus zum Verstellen der Sitzschale relativ zum Sockel kombiniert. Über die Ausgestaltung der Klemmvorrichtung ist in der obigen deutschen Patentschrift nichts weiter erwähnt.

Der Erfindung liegt die Aufgabe zugrunde, einen Kindersicherheitssitz zu schaffen, der bei vergleichsweise ausgestalteter Klemmvorrichtung kostengünstig herstellbar und dennoch zuverlässig fest an dem Fahrzeug-Anschnallgurt befestigt werden kann.

Zur Lösung dieser Aufgabe wird mit der Erfindung ein Kindersicherheitssitz zur Befestigung an einem Fahrzeug-Anschnallgurt der eingangs genannten Art vorgeschlagen, bei dem an dem an der Sitzschale und/oder an dem Sockel ein feststehender Klemmabschnitt vorgesehen ist, an welchem der Fahrzeug-Anschnallgurt anliegt, und bei dem an der Sitzschale und/oder an dem Sockel ein Klemmelement bewegbar gelagert ist, das in eine Klemmposition gegen den Klemmabschnitt und in eine Freigabeposition von dem Klemmabschnitt weg bewegbar ist, wobei der Fahrzeug-Anschnallgurt unter Umlenkung zwischen dem Klemmabschnitt und dem Klemmelement verläuft, wenn das Klemmelement in seiner Klemmposition gegen den Fahrzeug-Anschnallgurt gedrückt ist.

Bei dem erfindungsgemäßen Kindersicherheitssitz wird der Fahrzeug-Anschnallgurt bzw. derjenige Teil des Fahrzeug-Anschnallgurts, der zwischen den Klemmelement und dem Klemmabschnitt verläuft, umgelenkt, wenn das Klemmelement seine Klemmposition einnimmt. Der Fahrzeug-Anschnallgurt weicht also in der Klemmvorrichtung von einer geradlinigen Gurtführung ab. Dabei erfolgt vorzugsweise eine Gurtumlenkung um einen Winkel zwischen 0 bis 90° in einer ersten Umlenkungsrichtung und um einen weiteren Winkel zwischen 0 und 90° in einer zur ersten Umlenkungsrichtung entgegengesetzten zweiten Umlenkungsrichtung. Die Anschnallgurtführung in der Klemmvorrichtung erfährt also einen Versatz. Durch die Umlenkung des Anschnallgurts und das klemmende Festlegen des Anschnallgurts unter Umlenkung wird der Kindersicherheitssitz bei auf den Anschnallgurt wirkenden Zugbeanspruchungen am Anschnallgurt sicher gehalten, ohne daß die Klemmvorrichtung relativ zum Anschnallgurt rutscht. Zur Betätigung der Klemmvorrichtung wird das Klemmelement von Hand gegen den Klemmabschnitt bei dazwischenliegendem Anschnallgurt bewegt und verriegelt in seiner Klemmposition vorzugsweise automatisch. Zum Bewegen des Klemmelementes in die Freigabeposition wird beispielsweise ein Löseelement betätigt, das die Verriegelung aufhebt, so daß das Klemmelement aus der Klemmposition heraus in die Freigabeposition hineinbewegt werden kann.

Vorzugsweise ist der Klemmabschnitt als eine im Querschnitt U-förmige Klemmvertiefung ausgebildet, über der Fahrzeug-Anschnallgurt beim Anlegen an den Kindersicherheitssitz gespannt geführt ist, und daß das Klemmelement einen Klemmvorsprung aufweist, der in die Klemmvertiefung hinein bewegbar ist, wobei bei an dem Fahrzeug-Anschnallgurt festgelegtem Kindersicherheitssitz der Anschnallgurt in der Klemmposition des Klemmelementes zwischen dem Klemmvorsprung und der Wandung der Klemmvertiefung geklemmt gehalten ist. Im Längsquerschnitt durch den Anschnallgurt betrachtet, weist dessen Verlauf innerhalb der Klemmvorrichtung also eine Vorwölbung auf, die dem Querschnitt der U-förmigen Klemmvertiefung dem Querschnitt des Klemmvorsprungs entspricht. Zweckmäßig ist es, wenn die Klemmvertiefung einen rechteckigen Querschnitt aufweist und das Klemmelement ebenfalls einen rechteckigen Querschnitt aufweist, so daß der Anschnallgurt innerhalb der Klemmvorrichtung eine etwa 90° Umlenkung in einer ersten Umlenkrichtung, eine sich daran anschließende etwa 180° Umlenkung in der zur ersten Umlenkrichtung entgegengesetzen zweiten Umlenkrichtung und eine sich darin anschließende weitere etwa 90° Umlenkung in der ersten Umlenkungsrichtung erfährt. Die Verformung des Anschnallgurts im Klemmabschnitt ist also mit einer Sicke vergleichbar. Durch diese Dreifach-Umlenkung ist ein besonders stabiler Halt des Kindersicherheitssitzes am Anschnallgurt, insbesondere am Schultergut eines 3-Punkt-Gurtes gegeben. Dieser feste Halt sorgt dafür, daß der Kindersicherheitssitz auch bei seitlich auf das Fahrzeug einwirkenden Stößen zuverlässig in seiner Position auf der Rückbank oder einem Vordersitz des Kraftfahrzeuges gehalten wird.

Vorzugsweise ist das Klemmelement linear verschiebbar an dem Kindersicherheitssitz geführt. Die Führung ist dabei vorzugsweise derart, daß das Klemmelement in einem spitzen Winkel von insbesondere 30 bis 50° auf den Klemmabschnitt zu bzw. von diesem weg bewegbar ist. Durch die winkelige Ausrichtung des Klemmabschnitts relativ zur Verschiebungsrichtung des Klemmelementes tritt eine Verkeilung zwischen dem Klemmelement bzw. dessen Klemmvorsprung und dem Klemmabschnitt bzw. der U-förmigen Klemmvertiefung ein, wenn sich das Klemmelement in seiner Klemmposition befindet. Diese Keilwirkung verstärkt die Klemmkraft, mit der der Anschnallgurt am Kindersicherheitssitz gehalten wird.

Vorzugsweise sind sowohl das Klemmelement an der Sitzschale bewegbar gelagert als auch der Klemmabschnitt an der Sitzschale ausgebildet. Hierbei ist es insbesondere von Vorteil, wenn nicht nur die an der Sitzschale vorgesehene Klemmvorrichtung den Schultergurt des Dreipunkt-Anschnallgurts klemmend hält, sondern auch dessen Beckengurt durch eine Durchführung auf der rückwärtigen Seite der Rückenlehne der Sitzschale hindurchgeführt ist. Der aus Sitzschale und Sockel bestehende Kindersicherheitssitz wird bei dieser Ausgestaltung ausschließlich an seiner Sitzschale von dem Fahrzeug-Anschnallgurt angeschnallt gehalten. Dies wirkt sich insofern positiv aus, als das im Falle eines Unfalls von dem Fahrzeug-Anschnallgurt zu haltende Gewicht um das Gewicht des Sockels reduziert ist, weshalb die aufzufangenden Kräfte (Verzögerungskräfte) reduziert sind.

Wie bereit oben erwähnt, weist das Klemmelement eine Verriegelungsvorrichtung zur selbsttägigen Verriegelung in der Klemmposition auf. Vorteilhaft ist es hierbei, wenn die Zurückbewegung des Klemmelementes aus der Verriegelungsposition die Freigabeposition durch eine Rückstellvorrichtung in Form beispielsweise einer Feder zumindest unterstützt wird. Dies erleichtert die Handhabung der Klemmvorrichtung. Sofern die Rückstellvorrichtung als Feder ausgebildet ist, spannt diese sich bei Bewegung des Klemmelementes aus der Freigabeposition in die Klemmposition, wobei die durch die Federspannung aufgebaute und gespeicherte Kraft freigegeben wird, wenn das Klemmelement entriegelt wird.

Bei Kindersicherheitssitzen ist es aus Gründen einer Verbesserung der Recycelbarkeit wünschenswert, daß möglichst der gesamte Sitz, zumindestens aber größtenteils aus dem Material der Sitzschale und des Sockels, also aus Kunststoff, besteht. Selbst die Klemmvorrichtung sollte soviel Kunststoffteile wie möglich enthalten. Sofern dies möglich ist, sollte auf beispielsweise Metallteile gänzlich verzichtet werden können. Es bereitet weniger Probleme, das Klemmelement selbst aus Kunststoff herzustellen; auch die Linearführung des Klemmelementes durch Kunststoff sowie die Ausbildung des Klemmabschnitts aus Kunststoff bereitet keinerlei Schwierigkeiten. Auch der Verriegelungsmechanismus kann leicht aus Kunststoff hergestellt werden. Damit die Rückstellfeder ebenfalls aus Kunststoff herstellbar ist, ist es von Vorteil, daß die Rückstellfeder als an dem Klemmelement gehaltenes U-förmig gebogenes elastisches Federelement mit zwei Schenkeln ausgebildet ist, von denen einer beim Bewegen des Klemmelementes in die Klemmposition mit seinem Ende auf einer feststehenden Schrägfläche an dem Kindersicherheitssitz gleitet und sich dabei unter Erzeugung einer Rückstellkraft spreizt. Die bei Bewegung des Klemmelementes in die Klemmposition gespreizte Kunststoff-Feder wird sich nach dem Lösen des Verriegelungsmechanismus wieder in ihre ursprüngliche entspannte Position zurückstellen, wobei der zuvor gespreizte Schenkel bei seiner Zurückbewegung über die Schrägfläche das Klemmelement aus der Klemmposition heraus (in die Freigabeposition hinein) bewegt.

In vorteilhafter Weiterbildung der Erfindung ist ferner vorgesehen, daß an der rückwärtigen Seite der Sitzschale mindestens ein mit der Sitzschale verbundener Haltebügel vorgesehen ist, wobei zwischen dem Haltebügel und der Sitzschale sowohl der Schultergurt als auch der Beckengurt eines Dreipunkt-Anschnallgurts eines Fahrzeuges hindurchführbar sind. Hierbei ist von Vorteil, wenn das Klemmelement an der rückwärtigen Seite der Sitzschale linear verschiebbar geführt ist und der Klemmabschnitt an der der rückwärtigen Seite der Sitzschale zugewandten Innenseite des mindestens einen Haltebügels angeordnet ist. Das Klemmelement ist dabei zwischen Haltebügel und Rückenlehne der Sitzschale geführt. Sofern der Klemmabschnitt schräg zur Verschiebungsrichtung des Klemmelementes verläuft, entsteht eine gute Keilwirkung, da das Klemmelement wegen seiner beidseitigen Führung durch Haltebügel einerseits und Sitzschale andererseits vor einem Ausweichen bei eingeklemmt gehaltenem Anschnallgurt gehindert ist.

Bei an der Rückseite der Sitzschalen-Rückenlehne integriert ausgebildetem Haltebügel ist es von Vorteil, wenn der Bereich der Rückenlehne der Sitzschale als vom übrigen Teil der Sitzschale, dem Schalenteil, separates Teil ausgebildet ist und daß dieses separate Teil unverlierbar mit dem Schalenteil verbunden ist. Die Einzelteile des Kindersicherheitssitzes werden aus Kunststoff gefertigt, und zwar in Spritzgußtechnik. Sofern derart hergestellte Kunststoffteile Durchbrechungen und Durchführungen aufweisen, ist es je nach Ausgestaltung der Durchführungen erforderlich, das Schieber oder dergleichen in die Spritzgußform eingeführt werden. Aus Gründen der Optik und Stabilität (Verwindungssteifigkeit) werden die Seitenränder der Sitzschalen verhältnismäßig weit herumgezogen, so daß - in Seitenansicht betrachtet - die Seitenränder der Sitzschale zu beiden Seiten der Rückenlehne mit der rückwärtigen Seite der Rückenlehne im wesentlichen fluchten. Bei einer derartigen Konstruktion ist es wiederum werkzeugformtechnisch poblematisch, Schieber zum seitlichen Einschieben in die Werkzeugform vorzusehen, da die Werkzeugformstärke im Bereich der herumgezogenen Seitenränder der Sitzschale nur noch verhältnismäßig gering sind und damit die Haltbarkeit der Werkzeugform leidet. Aus diesem Grunde ist es vorteilhaft, die Rückenlehne mit dem einstückig mit dieser verbundenen Haltebügel als von der übrigen Sitzschale separates Teil herzustellen; die übrige Sitzschale bestünde dann aus dem vorgewölbt ausgebildeten Sitzschalenrand an den Seiten und an der Oberkante der Rückenlehne sowie aus dem das Gesäß aufnehmenden und dessen Seitenführung übernehmenden Teil der Sitzschale. Das Rückenlehnenteil mit dem mindestens einen integral mit diesem verbundenen Haltebügel wird mit dem Schalenteil, d.h. dem Teil der Sitzschale mit Ausnahme des Rückenlehnenteils, unverlierbar verbunden. Hierzu ist es vorteilhaft, wenn die beiden Kunststoffteile durch eine Klippverbindung oder dergleichen miteinander verbunden werden.

Bei Kindersicherheitssitzen nach einer oder mehrerer der erfindungsgemäßen vorstehend beschriebenen Arten ist zumeist ein (Stoff) Bezug für die Sitzschale vorgesehen. Der Bezug ist mit Durchführungen versehen, durch die hindurch der Kinder-Anschnallgurt des Kindersicherheitssitzes, der mit der Sitzschale verbunden ist, hindurchgeführt wird. Der Bezug wird zumeist mittels eines Gummizuges oder mittels miteinander verbindbarer Laschen an der Sitzschale gehalten. Vorteilhaft ist es in diesem Zusammenhang, wenn am Rand des Bezuges von diesem abstehende Laschen vorgesehen sind (beispielsweise angenäht oder angeklebt sind), die in schlitzartige Aussparungen einschiebbar sind, welche am Rand der Sitzschale ausgebildet und zum Sitzschalenrand hin offen sind. Die Befestigung eines solchen Bezuges an einer derartigen Sitzschale ist recht einfach zu bewerkstelligen, indem die zur Sitzschalen weisenden Laschen des Bezuges nach dem Auflegen des Bezuges auf die Sitzschale von Hand gegriffen und in die zu Sitzschalenrand offenen schlitzartigen Aussparungen eingeschoben werden. Die Laschen weisen vorzugsweise ein verdicktes freies Ende auf, so daß sie aus den Aussparungen nicht in zur Aussparungserstreckung rechtwinklig verlaufender Richtung herausrutschen können. Ferner kann der Bezug an seinem Rand mit ein oder mehreren Taschen versehen sein, in die der herumgezogene Sitzschalenrand der Sitzschale zumindest teilweise hineinragt, wenn der Bezug auf die Sitzschale aufgezogen ist. Ferner ist es von Vorteil, wenn das verdickte Ende der Laschen jeweils mit einem Keder versehen ist; grundsätzlich reicht es aber auch aus, wenn die Laschen bei einem schaumstoffunterlegten Bezug aus Streifen aus diesem Material gefertigt sind, die doppelt gelegt und bis auf den Umlenkungsbereich zusammengenäht sind. Der Umlenkungsbereich, der das freie Ende der so hergestellten Lasche bildet, ist aufgrund der Schaumstoffunterlagen des Bezuges verdickt, was bereit ausreicht, um ein unbeabsichtigtes Herausgleiten der Lasche aus den schlitzförmigen Aussparungen zu verhindern.

Bei der Plazierung eines Kindersicherheitssitzes in einem Kraftfahrzeug kann es dann zu Schwierigkeiten kommen, wenn das Fahrzeug mit (Voll- oder Halb-)Schalensitzen versehen ist. Dann nämlich kann der Fall eintreten, daß wegen der Schalenform des Fahrzeugsitzes der Sockel des Kindersicherheitssitzes keine ausreichende Standfläche auf dem Fahrzeugsitz hat. In diesem Fall ist es von Vorteil, wenn der im wesentlichen dreidimensionale quaderförmige Sockelkörper mit abgerundeten Übergangskantenbereichen zwischen seiner Unterseitenwand und seinen Vorder-, Rück- sowie Seitenwänden versehen ist und wenn ferner die Übergangskantenbereiche zwischen der Unterseitenwand und den beiden seitlichen Seitenwänden bis auf die Eckbereiche des Sockels zurückgezogen sind, d.h. zurückspringen. Hierbei ist es von Vorteil, wenn der gesamte Sockel keinerlei scharfen oder spitzen Kanten aufweist, vielmehr sämtliche Übergangskanten abgerundet sind. Die am weitesten auskragenden Eckenbereiche des Sockels, in denen dieser ebenfalls runde Wandungen aufweist, verleihen dem Kindersicherheitssitz eine ausreichend hohe und stabile Standfläche. Die Einschnürungen des Sockels an seinen Übergangskantenbereichen zwischen der Unterseitenwand und den seitlichen Seitenwänden erlauben das Aufstellen des Kindersicherheitssitzes auch auf einem Fahrzeug-Schalensitz. Hierdurch wird nämlich erreicht, daß der Kindersicherheitssitz mit der Unterseitenwand seines Sockels auf der Sitzfläche des Fahrzeug-Schalensitzes aufliegend aufgesetzt werden kann, ohne daß dabei die hochgezogenen Seitenränder des Fahrzeug-Schalensitzes störend wirken. Damit läßt sich dieser Kindersicherheitssitz auch für Erwachsene ergonomisch ausgebildete Fahrzeugsitze plazieren, ohne daß auf einen festen Sitz des Kindersicherheitssitzes im Fahrzeugsitz verzichtet werden muß. Auch läßt sich der Kindersicherheitssitz in sportlich eng angeformten Sitzen plazieren und hat von daher den Vorteil der besseren Aufnahme von Seitenführungskräften, da der eng angeformte mit zumindest leicht hochgezogenen Seitenkanten versehene Sitz den Sockel zumindest teilweise eng umschließt.

Nachfolgend wird anhand der Figuren ein Ausführungsbeispiel der Erfindung näher erläutert. Im einzelnen zeigen:
- Fig. 1: eine schematische Darstellung eines Kindersicherheitssitzes der vorstehend beschriebenen Art auf der Rückbank eines Fahrzeuges, wobei ein alternative Anordnung des Kindersicherheitssitzes auf der Rückbank in strichpunktierten Linien angedeutet ist,

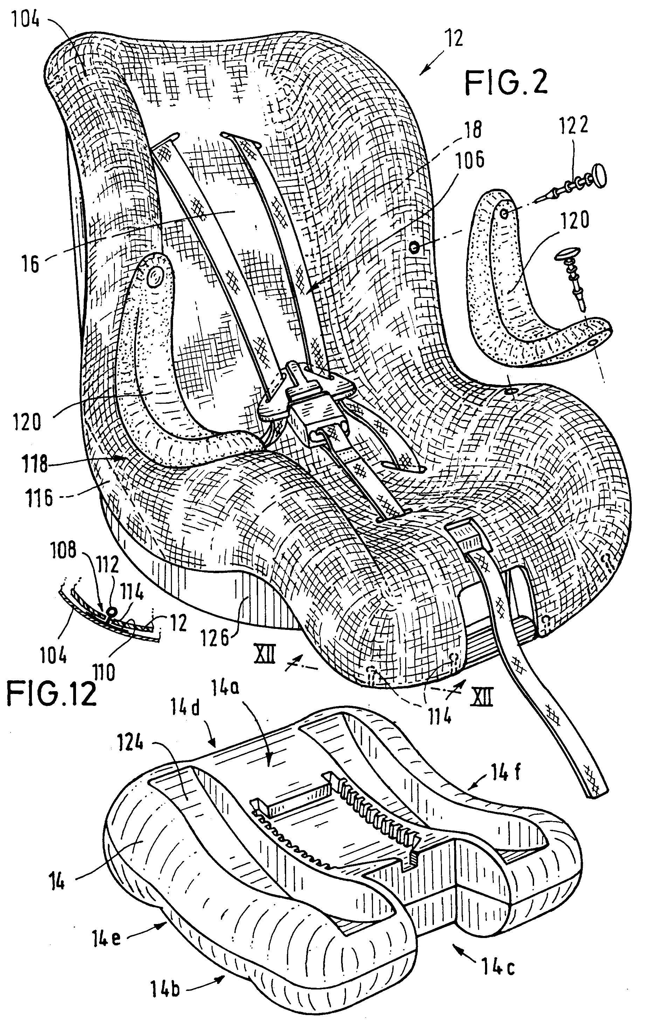

- Fig. 2: eine perspektivische Ansicht des Kindersicherheitssitzes in Explosionsdarstellung,
- Fig. 3: eine Seitenansicht des Kindersicherheitssitzes,
- Fig. 4: einen Vertikal-Längsschnitt durch den Kindersicherheitssitz,
- Fig. 5: einen Vertikal-Längsschnitt durch die Sitzschale des Kindersicherheitssitzes, wobei das Einsetzen der Rückenlehne in das Schalenteil der Sitzschale zeichnerisch angedeutet ist,
- Fig. 6: eine Ansicht der an der Rückenlehne angeordneten Klemmvorrichtung in Richtung des Pfeils VI der Fig. 3 in vergrößertem Maßstab,
- Fig. 7: eine Seitenansicht der Klemmvorrichtung in Richtung des Pfeils VII der Fig. 6, wobei sich das Klemmelement in seiner Freigabeposition befindet,
- Fig. 8: einen Schnitt entlang der Linie VIII-VIII der Fig. 7,
- Fig. 9: eine Seitenansicht der Klemmvorrichtung ähnlich derjenigen gemäß Fig. 7, wobei sich das Klemmelement jedoch in seiner Klemmposition befindet,
- Fig. 10: einen Schnitt entlang der Linie X-X der Fig. 9,
- Fig. 11: eine Seitenansicht auf den Kindersicherheitssitz, der Klemmvorrichtung wobei das Klemmelement weggelassen ist und die Rückstellfeder in ihrer entspannten Position bei in der Freigabeposition befindlichem Klemmelement und ihrer gespannten Position bei in der Klemmposition befindlichem Klemmelement angedeutet ist,
- Fig. 12: eine Ansicht in Richtung des Pfeils XII der Fig. 2 auf einen Kantenabschnitt der Sitzschale zur Verdeutlichung der Einhänge-Befestigung des Bezuges an der Sitzschale und
- Fign. 13 bis 15: schematisch den Verlauf des den Kindersicherheitssitz haltenden 3-Punkt-Fahrzeuggurts in drei verschiedenen Stellungen der Sitzschale relativ zum Sockel.

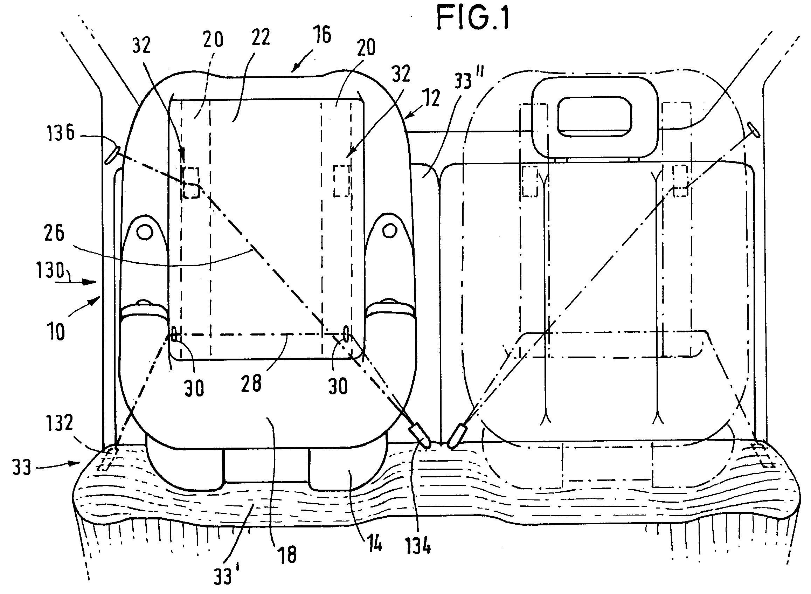

In den Figuren ist ein Kindersicherheitssitz 10 mit einer Sitzschale 12 und einem Sockel 14, an dem die Sitzschale 12 verschwenkbar gehalten und geführt ist, dargestellt. Sowohl die Sitzschale 12 als auch der Sockel 14 bestehen aus Kunststoff. Die Sitzschale 12 ist zweiteilig ausgebildet und weist ein Rückenlehnen-Einsatzstück 16 auf, das in ein Schalenteil 18 eingesetzt ist. Das Schalenteil 18 umfaßt die eigentliche Sitzfläche des Kindersicherheitssitzes und den die Schalenform bildenden hochgezogenen und vorgewölbten runden Schalenrand zu den beiden Seiten von Sitzfläche und Rückenlehne sowie oberhalb der Rückenlehne und unterhalb der Sitzfläche. An der Rückseite des Rückenlehnen-Einsatzstücks 16 sind zwei Bügel 20 einstückig angeformt (in Fig. 1 angedeutet), die ebenfalls aus Kunststoff bestehen und im Abstand zur Rückenlehne verlaufen. Zwischen der Rückenlehne 22 und den beiden Bügeln 20 entsteht also eine Durchbrechung 24. Durch diese Durchbrechung 24 hindurch verlaufen der in Fig. 1 bei 26 angedeutete Schultergurt und der in Fig. 1 bei 28 angedeutete Beckengurt eines Fahrzeug-Dreipunkt-Anschnallgurtes. Der Kindersicherheitssitz 10 wird also im Fahrzeug einzig und allein an der Sitzschale 12 festgeschnallt; eine Verbindung des 3-Punkt-Anschnallgurtes mit dem Sockel 14 ist nicht vorgesehen. Der Beckengurt 28 ist an zwei hakenförmigen Führungsvorsprüngen 30 eingehakt bzw. zwischen diesen und dem unterhalb dieser angeordneten Enden der Durchbrechungen 24 geführt. Die Führungsvorsprünge 30 sind auf der der Rückenlehne 22 zugewandten Innenseite der Bügel 20 (hintere Kanten 40 der Durchbrechungen 24) angeformt und ragen in die Durchbrechungen 24 an deren dem Sockel 14 zugewandten Ende hinein, wobei sie mit Abstand zur Rückenlehne 22 enden. Der Schultergurt 26 ist in einer von zwei Klemmvorrichtungen 32 eingeklemmt gehalten, die oberhalb der Führungsvorsprünge 30 am oberen Ende des Rückenlehnen-Einsatzteils 16 zwischen der Rückenlehne 22 und den Bügeln 20 angeordnet sind. Da die beiden Bügel 20 gemäß Fig. 1 symmetrisch zur Vertikalmittelebene des Kindersicherheitssitzes 10 angeordnet sind, läßt sich der Kindersicherheitssitz 10 sowohl rechts als auch links im Fahrzeug festschnallen, wobei im ersten Fall die eine Klemmvorrichtung und im zweiten Fall die andere Klemmvorrichtung zum Tragen kommt. Die beiden Möglichkeiten der Anordnung des Kindersicherheitssitzes 10 in Fahrtrichtung sind in Fig. 1 dargestellt. Darüber hinaus ist es auch möglich, den Kindersicherheitssitz 10 entgegengesetzt zur Fahrtrichtung im Fahrzeug anzuordnen, wobei es auch bei dieser Anordnung des Kindersicherheitssitzes 10 keine Rolle spielt, ob er links oder rechts aufgestellt wird. In Fig. 1 ist der Kindersicherheitssitz 10 in Fahrtrichtung auf der Rückbank 33 eines Kraftfahrzeuges angeordnet, wobei der Sockel 14 auf der Sitzfläche 33' aufliegt und die Rückseite der Rückenlehne 22 der Sitzschale 12 an der Rückenlehne 33'' der Rückbank anliegt.

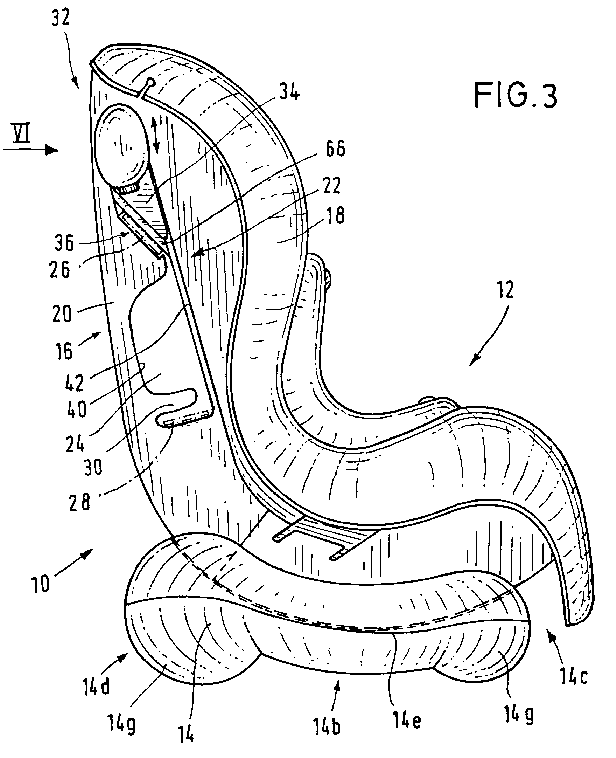

Jede Klemmvorrichtung 32 weist ein längsverschiebbar an der Rückenlehne 22 der Sitzschale 12 geführtes Klemmelement und einen an dem Bügel 20 ausgebildeten Klemmabschnitt 36 auf. Während der Schultergurt 26 zwischen dem Klemmelement 34 und dem Klemmabschnitt 36 verläuft (in Fig. 3 angedeutet), verläuft der Beckengurt 28 an der der Rückenlehne 22 zugewandten Innenseite der Bügel 20, wobei er durch die hakenförmigen Führungsvorsprünge 30 vor einem Verrutschen, insbesondere vor einem Hochrutschen gehindert wird.

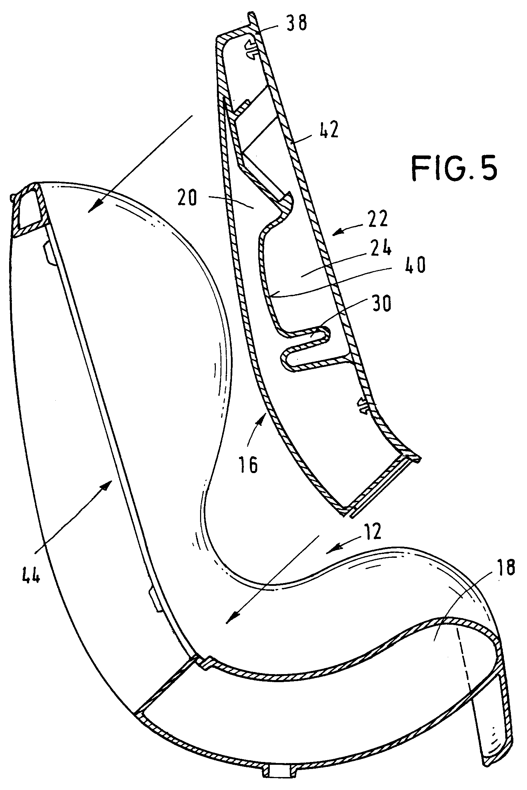

Wie in den Figuren angedeutet und oben beschrieben, ist das Rückenlehnen-Einsatzstück 16 mit den beiden Bügeln 20 ein zum übrigen Teil 18 der Sitzschale 12 separates Teil, das in eine Aussparung im Rückenlehnenbereich dieses Schalenteils 18 einrastend einsetzbar ist. Das Rückenlehnen-Einsatzstück 16 wird gemäß Fig. 5 von vorn in die Öffnung des Schalenteils 18 eingesetzt. Zu diesem Zweck ist das Einsatzstück 16 an seinem Rand mit Zapfen versehen, die in nach vorne offene Aufnahmen am Rand 44 des Schalenteils 18 einrastbar sind und mit diesen verklipsen. Der die Rückenlehne 22 bildende Abschnitt des Rückenlehnen-Einsatzstückes 16 hat an seinem Rand 38 einen Überstand 48, der das Schalenteil 18 im Bereich von dessen Sitzfläche übergreift, womit ein Ablösen des Schalenteils 18 vom Rückenlehnen-Einsatzstück 16 bei im Fahrzeug festgezurrtem Kindersicherheitssitz 10 und auftretenden Verzögerungen verhindert wird.

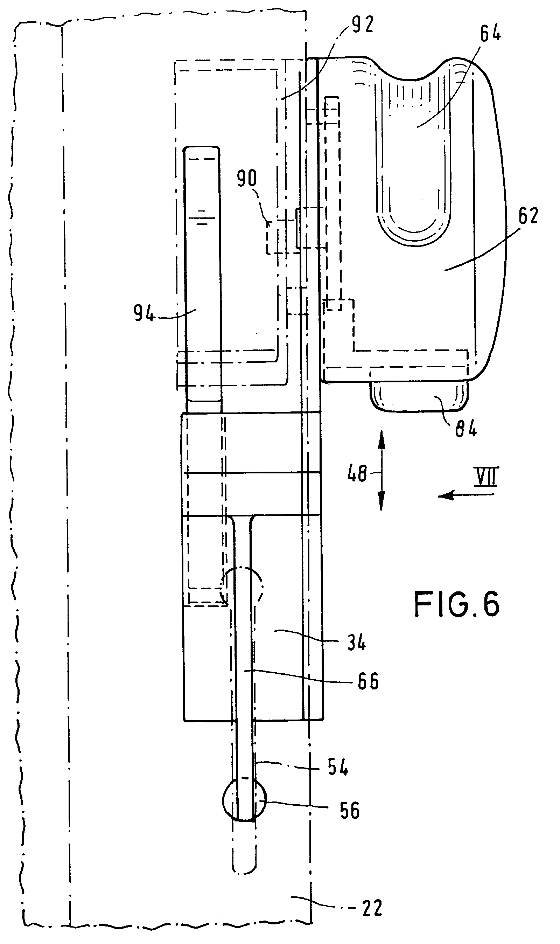

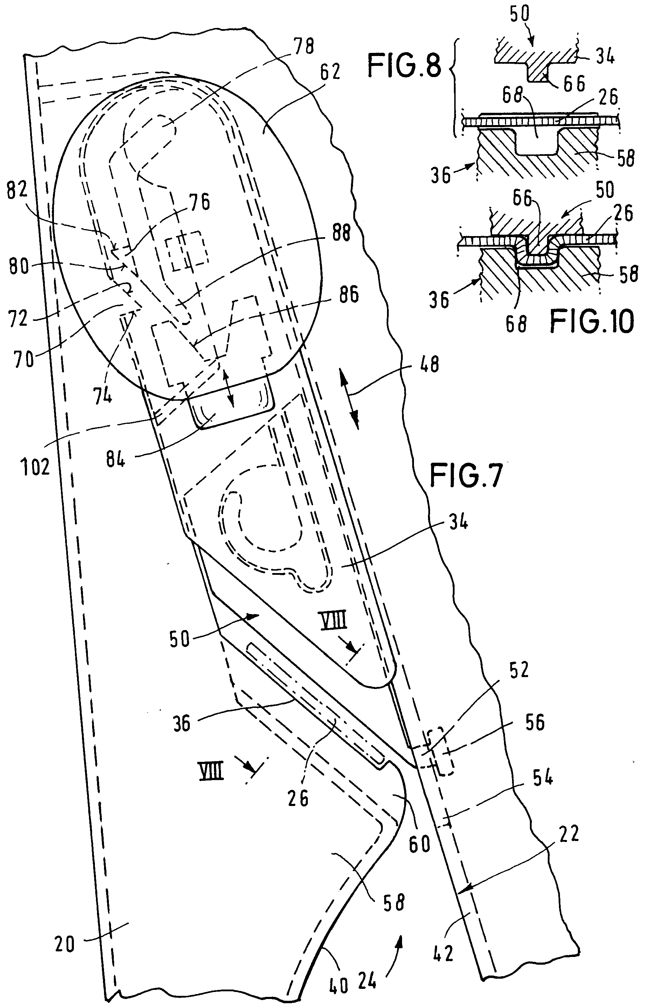

Der Aufbau und die Funktionsweise einer Klemmvorrichtung 32 wird nachfolgend anhand der Fign. 6 bis 11 näher erläutert. Das Klemmelement 34 ist in Richtung des Doppelpfeils 48 der Fig. 7 am oberen Ende einer Durchbrechung 24 zwischen der Rückenlehne 22 und dem Bügel 20 gehalten geführt. Das Klemmelement 34 weist ein dem Klemmabschnitt 36 des Bügels 20 zugewandtes schrägverlaufendes Klemmende 50 auf, das in einem Winkel von 30 bis 50° zur Verschiebungsrichtung 48 des Klemmelementes 34 verläuft. An seinem Klemmende 50 trägt das Klemmelement 34 einen Fortsatz 52, der sich durch ein Langloch 54 in der Rückenlehne 22 erstreckt und an dem eine den Langlochrand übergreifende Scheibe oder dergleichen 56 angebracht ist. Parallel zum schrägverlaufenden Klemmende 50 des Klemmelementes 34 verläuft der Klemmabschnitt 36, der damit jedenfalls in einem Winkel zwischen 30 und 50° zur Verschiebungsrichtung 48 des Klemmelementes 34 sich erstreckt. Der Klemmabschnitt 36 ist an einem Vorsprungsbereich 58 des Bügels 20 ausgebildet, und zwar auf der dem Klemmelement 34 zugewandten Flanke dieses Vorsprungsbereichs. Durch die Ausbildung des der Rückenlehne 22 zugewandten Vorsprungsbereich 58 an der der Rückenlehne 22 zugewandten Innenseite des Bügels 20 ist die Durchbrechung 24 querschnittsmäßig auf ein Minimum reduziert; unterhalb dieser minimalen Stelle ist die Durchbrechung 24, wie in den Fign. dargestellt, wieder verbreitert. Durch diesen Bereich der Durchbrechung 24 hindurch werden der Schulterund Beckengurt hindurchgeführt, wobei der Schultergurt 26 durch die verengte Stelle hindurchgeführt wird, um anschließend zwischen dem Klemmabschnitt 36 und dem Klemmende 50 des Klemmelementes 34, wie in Fig. 7 angedeutet, zu verlaufen. Am Vorsprungsbereich 58 ist ein zusätzlicher Hakenvorsprung 60 ausgebildet, der ein unbeabsichtigtes Abrutschen des Schultergurtes 26 in den Bereich größeren Querschnitts der Durchbrechung 24 verhindert.

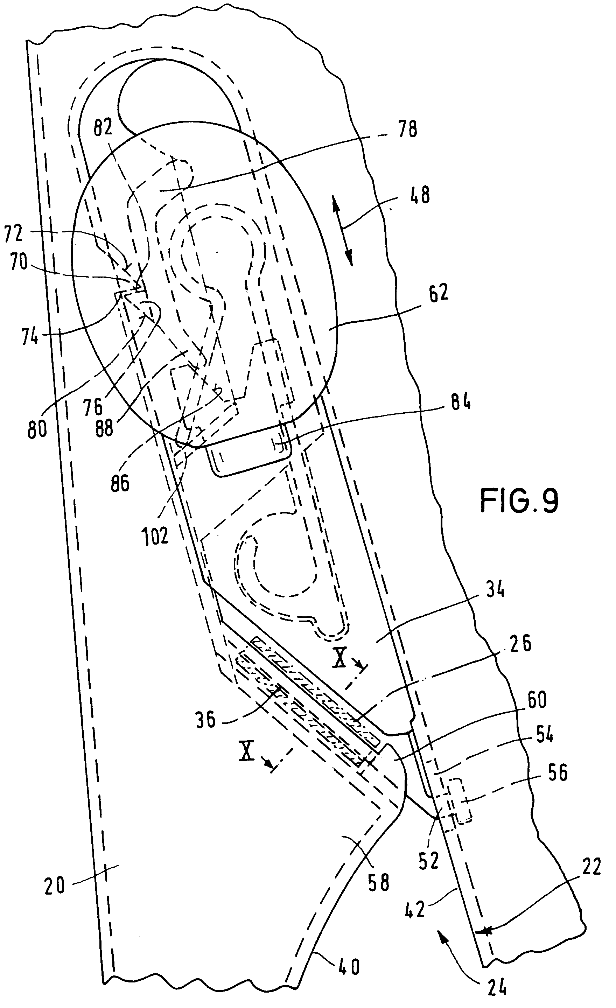

Fig. 8 zeigt im Querschnitt die Situation im Bereich zwischen dem Klemmende 50 des Klemmelementes 34 und dem Klemmabschnitt 36 mit dem dazwischen verlaufenden Schultergurt 26, bevor das Klemmelement 34 in seine Klemmposition überführt worden ist. In der Darstellung der Fign. 7 und 8 befindet sich das Klemmelement 34 in seiner Freigabeposition.

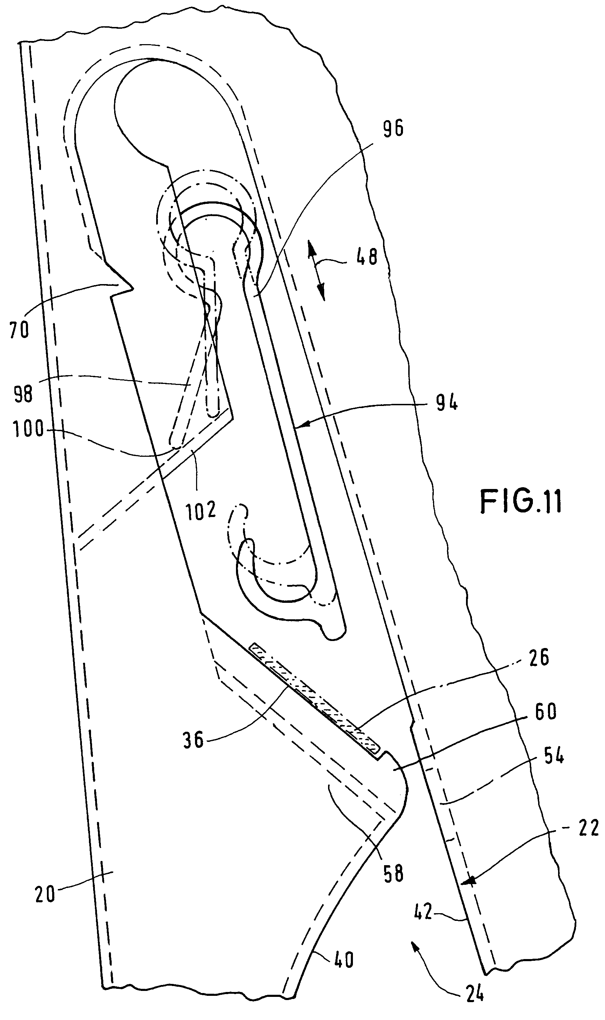

Mit dem Klemmelement 34 festverbundenen ist ein Betätigungselement 62, das in Seitenansicht betrachtet rund bzw. elipsenförmig ausgebildet ist und mit der Hand greifbar ist. Das Betätigungselement 62 ist im Bereich des oberen Randes der Sitzschale 12 angeordnet, und zwar zu der jeweiligen Außenseite des betreffenden Bügels 20. In der Umfangsfläche des Betätigungselementes 32 ist eine in Fig. 6 bei 64 dargestellte Vertiefung ausgebildet. Das Betätigungselement 32 wird von Hand ergriffen, indem Daumen und Zeigefinger auf die Umfangsfläche des Betätigungselementes 32 von oben gelegt werden. Durch (in Bezug auf die Darstellungen in den Fign.) herunterbewegen des Betätigungselementes 62 wird das Klemmelement 34 in Richtung auf den Klemmabschnitt 36 in seine Klemmposition gemäß Fig. 9 bewegt. Die Querschnittsansicht durch den Bereich zwischen dem Klemmende 50 des Klemmelementes 34 und dem Klemmabschnitt 36 ist in Fig. 10 dargestellt. Wie man den Darstellungen gemäß den Fign. 8 und 10 entnehmen kann, weist das Klemmende 50 einen zentralen im Querschnitt viereckigen Klemmvorsprung 66 auf, der sich über das gesamte Klemmende 50 erstreckt. Der Klemmabschnitt 36 ist als im Querschnitt rechteckige U-förmige Klemmvertiefung oder Klemmnut 68 vorgesehen, die in dem dem Klemmelement 34 zugewandten Flankenbereich des Vorsprungsbereichs 58 ausgebildet ist. Die Klemmvertiefung 68 ist zentrisch zum Klemmvorsprung 66 angeordnet und erstreckt sich ebenfalls über eine der Breite des Klemmendes 50 gleichende Strecke.

In der Klemmposition des Klemmelementes 34 gemäß den Fign. 9 und 10 ist der Klemmvorsprung 66 in die Klemmvertiefung 68 eingetaucht, wobei zwischen dem Klemmvorsprung 66 und der Klemmvertiefung 68 der Schulter gurt 26 eingeklemmt verläuft. Wie der Darstellung aus Fig. 10 zu entnehmen ist, erfährt der Schultergurt 26 eine Zwangsumlenkung, d.h. er verläuft nicht mehr geradlinig, wie dies noch bei in der Freigabeposition befindlichem Klemmelement 34 der Fall ist (s. Fig. 8). Aufgrund der Zwangsumlenkung des Schultergurts 26 in der Klemmvorrichtung 32 wird ein Rutschen des Schultergurts 26 relativ zum Kindersicherheitssitz 10, d.h. relativ zum Klemmelement 34 und zum Klemmabschnitt 36 weitestgehend verhindert, wenn der Schultergurt 26 Zugbeanspruchungen ausgesetzt ist, wie dies bei plötzlichen Verzögerungen des Fahrzeuges der Fall ist. Die doppelte S-förmige Umlenkung des Schultergurts 26 in der Klemmvorrichtung 32 hat darüber hinaus die Wirkung, daß mit steigenden Zugbeanspruchungen die Haltekraft, mit der über Klemmelement und Klemmabschnitt der Kindersicherheitssitz 10 am Schultergurt 26 gehalten ist, sich noch vergrößert. Durch die keilförmige Ausgestaltung des Klemmelementes 34 an seinem Klemmende 50 und den als korrespondierende Keilfläche wirkenden Klemmabschnitt 36 wird erreicht, daß ohne übermäßig großen Kraftaufwand das Klemmelement 34 beim Herunterbewegen des Betätigungselementes 32 mit seinem Klemmende ausreichend weit in die Klemmvertiefung 68 hineinbewegt wird.

Wie man den Fign. 7 und 9 entnehmen kann, tritt bei in die Klemmposition gemäß Fig. 9 bewegtem Klemmelement 34 eine selbsttätige Verriegelung des Klemmelementes 34 an Rückenlehne 22 und Bügel 20 ein. Hierzu ist am Bügel 20 ein nasenförmiger Verriegelungsvorsprung 70 vorgesehen. Der Verriegelungsvorsprung 70 weist eine unter einem Winkel von ca. 30° zur Verschiebungsrichtung 48 verlaufende Schrägfläche 72 und eine unter einem Winkel von 90° zur Verschiebungsrichtung 48 verlaufende Verriegelungsfläche 74 auf. Mit diesem Verriegelungsvorsprung 70, der ortsfest am Bügel 20 vorgesehen ist, wirkt ein Hakenvorsprung 76 zusammen. Der Hakenvorsprung 76 ist an einem mit dem Klemmelement 34 verbundenen federelastischen Teil 78 angeordnet und liegt dem Verriegelungsvorsprung 70 gegenüber. Auch der Hakenvorsprung 76 weist eine Schrägfläche 80 auf, die beim Bewegen des Klemmelementes 34 in die Klemmposition in Anlage mit der Schrägfläche 72 des Verriegelungsvorsprungs 70 gelangt. Dadurch wird der Hakenvorsprung 76 ausgerückt, so daß er sich an dem Verriegelungsvorsprung 70 vorbeibewegen kann. Dabei verformt sich das federelastische Teil 78, das den Hakenvorsprung 76 trägt. Sobald der Hakenvorsprung 76 an dem Verriegelungsvorsprung 70 vorbeibewegt worden ist, federt das federelastische Teil 78 zurück, so daß der Hakenvorsprung 76 nun mit einer sich an die Schrägfläche 80 anschließenden quer zur Verschieberichtung 48 verlaufenden Fläche 82 an der Verriegelungsfläche 74 des Verriegelungsvorsprungs 70 zur Anlage kommt, womit ein ungewolltes Zurückbewegen des Klemmelementes 34 aus seiner Verriegelungsposition ausgeschlossen ist. Über einen in dem Betätigungselement 62 geführten Löseknopf 84 läßt sich das federelastische Teil 78 beim Drücken des Löseknopf 84 derart verbiegen, daß der Hakenvorsprung 76 bis vor den Verriegelungsvorsprung 70 vorspringt, so daß der Hakenvorsprung 76 nun am Verriegelungsvorsprung 70 vorbeibewegt werden kann und damit beim Hochbewegen des Betätigungselementes 62 das Klemmelement 34 aus der Klemmposition heraus in die Freigabeposition hineinbewegt werden kann. Der Löseknopf 84 wirkt über eine Schrägfläche 86 mit dem freien Ende 88 des an seinem anderen Ende festgelegten federelastischen Teil 78 zusammen, weshalb dieses aufgrund seiner Rückstelleigenschaften beim Lösen des Löseknopf 84 diesen wieder aus dem Betätigungselement 62 herausdrückt.

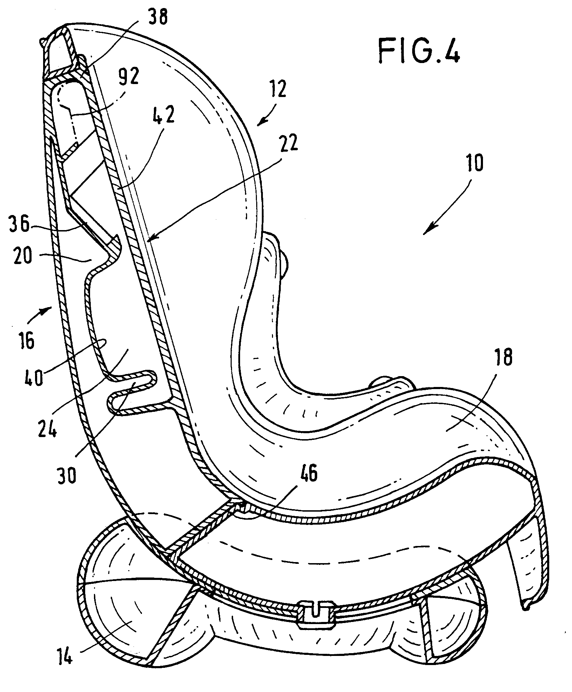

Neben der Führung des Klemmelementes 34 an der Rückenlehne 22 ist das Klemmelement 34 über einen in Fig. 6 bei 90 angedeuteten Haken am Bügel 20 geführt. Dieser Führungshaken 90 hintergreift die in Fig. 11 sowie in Fig. 4 dargestellte Kante 92. Die Kante 92 verläuft in der Verschiebungsrichtung 48 des Klemmelementes 34. Durch dieses Doppelführung des Klemmelementes 34 sowohl an der Rückenlehne 23 als auch an dem Bügel 20 ist das Klemmelement 34 unverlierbar am Kindersicherheitssitz gehalten.

An dem Klemmelement 34 ist auch noch eine Rückstellfeder 94 gehalten, die sich beim Bewegen des Klemmelementes 34 in die Klemmposition spannt, um beim Lösen der aus den Vorsprüngen 70 und 76 bestehenden Verriegelung eine Zurück- bzw. Aufwärtsbewegung des Klemmelementes 34 in die Freigabeposition zu bewerkstelligen oder zumindest zu erleichtern. Die Position der mit dem Klemmelement 34 verbundenen Rückstellfeder 94 ist in Fig. 11 sowohl für die Klemmposition als auch für die Freigabeposition des Klemmelementes 34 in gestrichelten Linien eingezeichnet. Bei der Rückstellfeder 94 handelt es sich um eine im wesentlichen U-förmig ausgebildete Schenkelfeder, deren beiden Schenkel 96,98 bei unbelasteter Rückstellfeder 94 geringfügig gespreizt sind, wie in Fig. 11 angedeutet. Während der Schenkel 96 nach unten verlängert und zurückgebogen ist (in diesem unteren Teil ist die Schenkelfeder 94 am Klemmelement 34 gehalten, wie in Fig. 9 angedeutet, während sie im übrigen Teil frei ist, wie in Fig. 6 angedeutet), ist der leicht abgespreizte Schenkel 98 geringfügig ausgestellt und ruht mit seinem freien Ende 100 auf einer Schrägfläche 102, die am Bügel 20 ausgebildet ist. Beim Herabbewegen des Klemmelementes 34 gleitet das freie Ende 100 des Schenkels 98 auf der Schrägfläche 102 entlang, bis die Schenkelfeder 94 in der Verriegelungsposition des Klemmelementes 34 voll gespreizt ist (s. Fig. 9). Durch diese Abspreizung bzw. diese Verstärkung einer Abspreizung des Schenkels 98 wird in der Feder 94 eine Rückstellkraft aufgebaut und gespeichert. Bei Entriegelung des Klemmelementes 34 stellt sich die Feder 94 aufgrund der Rückstellkraft wieder zurück, wobei sich der abgespreizte Schenkel 98 in Richtung auf den anderen Schenkel 86 bewegt. Das freie Ende 100 des abgespreizten Schenkels 98 gleitet dabei wiederum auf der Schrägfläche 102 entlang, wobei sich aufgrund der Neigung der Schrägfläche 102 relativ zur Verschiebungsrichtung 48 des Klemmelementes 34 eine auf dieses wirkende Kraftkomponente einstellt, die in Richtung auf die Freigabeposition wirkt.

Einer der Vorzüge der hier beschriebenen Klemmvorrichtung 32 besteht darin, daß sämtliche Teile der Klemmvorrichtung aus Kunststoff gefertigt werden können. Da auch die übrigen Teile des Kindersicherheitssitzes 10 aus Kunststoff bestehen, ist dieser außerordentlich recycelfreundlich.

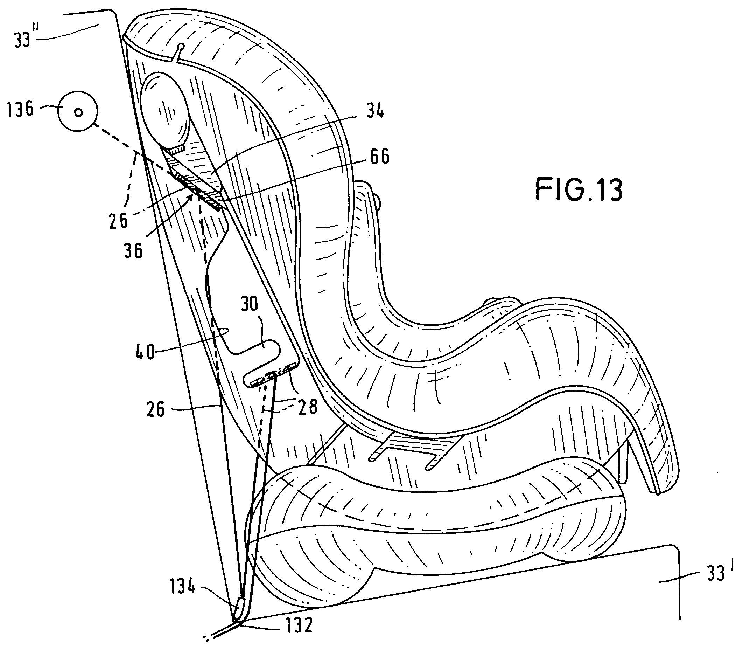

Wie in Fig. 1 angedeutet, ist die Sitzschale 12 mit einem Bezug 104 bespannt, dessen Zuschnitt der Formgebung der Sitzschale 12 entsprechend angepaßt ist. In dem Bezug 104 sind im Rückenlehnenbereich und in den seitlichen Beckenbereichen Durchführungen vorgesehen, durch die hindurch die Gurte eines in diesem Fall 5-Punkt-Anschnallgurtes 106 für das Baby bzw. Kleinkind hindurchgeführt sind. Der Bezug 104 schließt mit seinem Rand in etwa bündig mit dem herumgezogenen Sitzschalenrand ab, wobei er gegebenenfalls geringfügig über diesen übersteht. Auf der dem Sitzschalenrand zugewandten Unterseite des Bezugrandes sind einzelne Einhängelemente 108 angebracht, die von dem Bezug 104 abstehen (Fig. 12). Die Einhängelemente 108 weisen einen an den Bezug 104 angrenzenden Steg 110 und eine an dessen freien Ende angeordnete Verdickung 112 auf. In dem Sitzschalenrand sind den Einhängelementen 108 gegenüberliegende Einschiebeschlitze 114 ausgebildet, die zum Sitzschalenrand hin offen sind. Mittels der Einhängelemente 108 wird der Bezug 104 an der Sitzschale 12 festgelegt, dem die Einhängelemente 108 über das offene Ende in die Einschiebeschlitze 104 hineingeschoben werden, wie dies in Fig. 12 dargestellt ist. Ferner sind am Rand des Bezuges 104 zwei Taschen 116 ausgebildet, die um die gerundeten Kanten des Sitzschalenrandes im Bereich der Armlehnen 118 gezogen sind.

Im Bereich der Armlehnen 118 sind von außen auf den Bezug 104 zwei der Randkontur der Sitzschale 12 angepaßte Armlehnstücke 120 aus Kunststoff aufgesetzt. Die Armlehnstücke 120 sind mit verbreitete Köpfe aufweisenden Steckclips 122 gemäß Fig. 1 befestigt, wobei diese Steckclips 122 durch Bohrungen in Armlehnstücken 120, dem Bezug 104 und dem Sitzschalenrand hindurchgesteckt sind. Die Einsteckclips 122 sorgen zusammen mit den Armlehnstücken 120 ebenfalls für eine Fixierung des Bezuges 104 an der Sitzschale 12.

Wie in den Fign. dargestellt, handelt es sich bei dem Sockel 14 um ein dreidimensionales speziell geformtes Teil, dessen sämtliche Kanten abgerundet sind. Gemäß Fig. 1 weist der Sockel eine der Sitzschale 12 zugewandte Oberseitenwand 14a und eine Unterseitenwand 14b auf, wobei in der Oberseitenwand 14a Führungsnuten 124 zur Aufnahme von an der Unterseite der Sitzschale 12 ausgebildeten Führungsvorsprüngen 126 vorgesehen sind. Ferner ist der Sockel 14 mit einer Vorderseitenwand 14c und einer Rückseitenwand 14d versehen. An den Seiten ist der Sockel 14 durch die Seitenwände 14d und 14f begrenzt. Sämtliche Übergangskanten zwischen den Enden des zweigeteilten Sockels 14 sind abgerundet. Insbesondere sind die zur Unterseitenwand 14b angrenzenden Übergangskanten abgerundet. Der Sockel 14 weist überdies an seiner Vorder- und Rückseite über diese sich erstreckende ausgeformte Füße 14g auf, die ebenfalls eine runde Außenfläche aufweisen. In dem Bereich zwischen den Füßen 14g springt die Unterseite 15b und insbesondere der jeweilige Übergangsbereich zur Seitenwand 14f zurück. Aufgrund seiner gänzlich runden bzw. mit Abrundungen versehenen Struktur läßt sich der Sockel 14 des Kindersicherheitssitzes 10 auch in Halb- bzw. Vollschalensitze oder in Sitze mit leicht hochgezogenen Sitzflächenrändern eines Kraftfahrzeuges problemlos positionieren, wobei der Sockel 14 fest von den hochgezogenen Sitzflächenränder eingeschlossen ist. Dies gilt auch für vergleichsweise schmale Sitze, wobei die Seitenführung des Sockels 14 in dem Fahrzeugsitz wegen der Abrundungen und zurückliegenden Partien im unteren Bereich des Sockels 14 recht gut ist.

In den Fign. 13 bis 15 ist schematisch bei Betrachtung des Kindersicherheitssitzes 10 in Richtung des Pfeils 130 der Fig. 1 der Verlauf des 3-Punkt-Gurts in drei verschieden stark verschwenkte Stellungen der Sitzschale 12 (aufrechte Position, mittlere Position und Liegeposition) dargestellt.

Im vom 3-Punkt-Gurt gehaltenen Zustand des Kindersicherheitssitzes verläuft der Beckengurtteil 28 ausgehend von der festen Kraftfahrzeug-Gurtverschraubung 132 durch die beiden Durchbrechungen unterhalb von deren Führungsvorsprüngen 30 bis zum Gurtschloß 134. Der Schultergurtteil 126 erstreckt sich ausgehend vom Gurtautomaten 136 durch die beiden Durchbrechungen hindurch bis zum Gurtschloß 134, wobei er an der Klemmvorrichtung 32 der zum Gurtautomaten 136 nächstliegenden Durchführung festgeklemmt ist (wirksame Klemmvorrichtung, s. auch Fig. 1). Damit ist die Länge des 3-Punkt-Gurtes zwischen der wirksamen Klemmvorrichtung 32 und der Gurtverschraubung 132 unveränderbar. Die Lage der wirksamen Klemmvorrichtung 32 und die Lage der Führungsvorsprünge 30 relativ zur Rückbank 33 ändern sich beim Verschwenken der Sitzschale (s. Fign. 13 bis 15). Damit verändert sich der Abstand der wirksamen Klemmvorrichtung 32 zum Gurtautomaten 136 und der Abstand der Führungsvorsprünge 30 zur Gurtverschraubung 132 und zum Gurtschloß. Die Bewegung der wirksamen Klemmvorrichtung 32 und der Führungsvorsprünge 30 ist neben der Neigungsverstellung der Sitzschale 12 auch dadurch verursacht, daß die obere Kante der Rückenlehne 22 über das hintere Ende des Sockels 14 mehr oder weniger weit übersteht, so daß sich die Position des Sockels 14 relativ zur Kraftfahrzeug-Rückbank 33 verändert (s. Fign. 13 bis 15). Die Anordnung und Bewegung der wirksamen Klemmvorrichtung 32, der Führungsvorsprünge 30 und des Sockels 14 relativ zueinander führen bei dem hier beschriebenen Kindersicherheitssitz 10 dazu, daß der Kraftfahrzeug-3-Punkt-Gurt zwischen der wirksamen Klemmvorrichtung 32, dem Gurtschloß 134 und der Gurtverschraubung 132 stets straff an dem Rand der Durchbrechungen 24 anliegt, und zwar unabhängig von der Neigungsposition der Sitzschale 12. Der Kindersicherheitssitz 10 bleibt also auch dann sicher vom 3-Punkt-Gurt des Kraftfahrzeuges gehalten, wenn bei durch die wirksame Klemmvorrichtung 32 festgeklemmtem Schultergurt 26 die Neigung der Sitzschale 12 verändert wird.

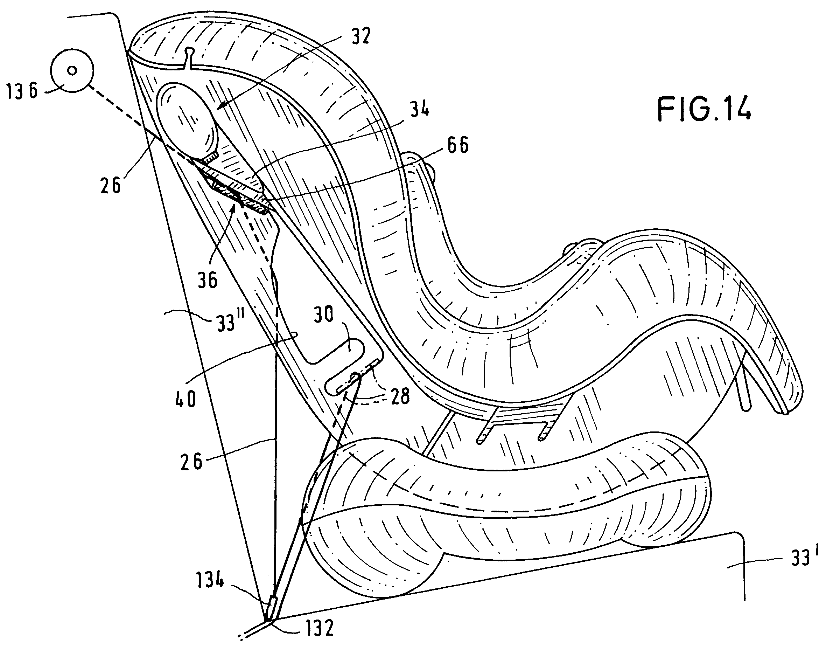

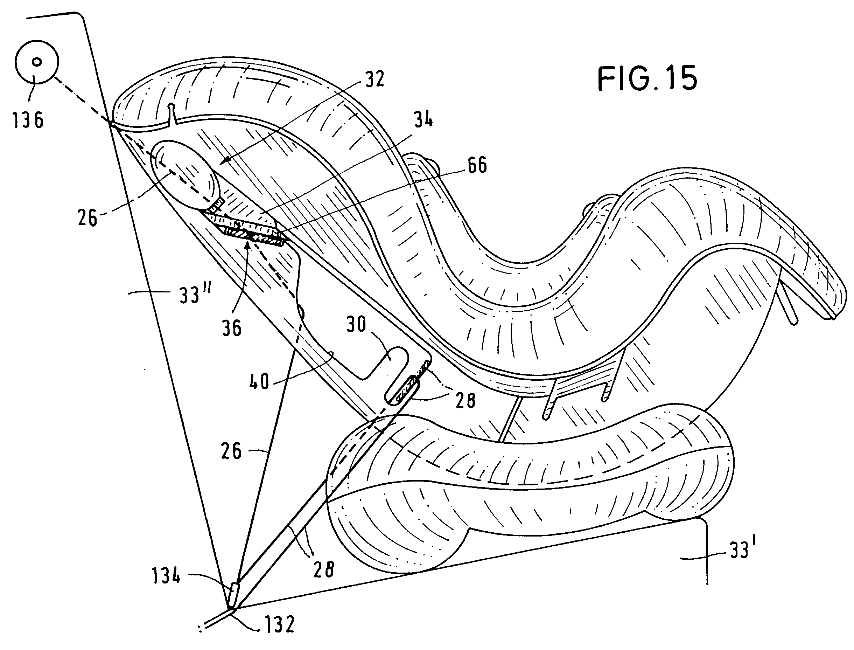

Den Führungsvorsprüngen 32, die, wie insbesondere die Fign. 14 und 15 zeigen, auch eine Mitnehmerfunktion haben, kommt dabei eine ganz entscheidende Rolle zu; denn sie verhindern, daß der Beckengurt 28 an den hinteren Begrenzungskanten 40 der Durchbrechungen 24 entlangrutschen, wenn die Neigung der Sitzschale 12 verändert wird.

## Patentansprüche

1. Kindersicherheitssitz mit
- einem Sockel (14)
- einer Sitzschale (12), die mit dem Sockel (14) verbunden ist, und
- einer Klemmvorrichtung (32) zum klemmenden Festlegen der Sitzschale (12) und/oder des Sockels (14) an einem Anschnallgurt insbesondere einem Dreipunkt-Anschnallgurt (26,28) eines Fahrzeuges,
**dadurch gekennzeichnet,**
- daß an der Sitzschale (12) und/oder an dem Sockel (14) ein feststehender Klemmabschnitt (36) vorgesehen ist, an dem der die Sitzschale (12) und/oder den Sockel (14) haltende Fahrzeug-Anschnallgurt (26,28) anliegt, und
- daß an der Sitzschale (12) und/oder an dem Sockel (14) ein Klemmelement (34) bewegbar gelagert ist, das in eine Klemmposition gegen den Klemmabschnitt (36) und in eine Freigabeposition von dem Klemmabschnitt (36) weg bewegbar ist,
- wobei der Fahrzeug-Anschnallgurt (26,28) unter Umlenkung zwischen dem Klemmabschnitt (36) und dem Klemmelement (34) verläuft, wenn das Klemmelement (34) in seiner Klemmposition gegen den Fahrzeug-Anschnallgurt (26,28) gedrückt ist.

2. Kindersicherheitssitz nach Anspruch 1, dadurch gekennzeichnet, daß der Klemmabschnitt (36) eine im Querschnitt U-förmige Klemmvertiefung (68) aufweist, zu deren Längserstreckung der Fahrzeug-Anschnallgurt (26,28) quer verläuft, und daß das Klemmelement (34) einen Klemmvorsprung (66) aufweist, der in die Klemmvertiefung (68) hineinbewegbar ist, wobei bei an dem Fahrzeug-Anschnallgurt (26,28) festgelegter Sitzschale (12) und/oder festgelegtem Sockel (14) der Fahrzeug-Anschnallgurt (26,28) in der Klemmposition des Klemmelementes (34) zwischen dem Klemmvorsprung (66) und der Klemmvertiefung (68) geklemmt gehalten ist.

3. Kindersicherheitssitz nach Anspruch 1 oder 2, dadurch gekennzeichnet, daß das Klemmelement (34) linear verschiebbar geführt ist, wobei der Klemmabschnitt (36) in einem Winkel kleiner als 90°, vorzugsweise in einem Winkel zwischen 30 und 50°, zur Verschiebungsrichtung (48) des Klemmelementes (34) verläuft.

4. Kindersicherheitssitz nach einem der Ansprüche 1 bis 3, dadurch gekennzeichnet, daß das Klemmelement (34) an der Sitzschale (12) bewegbar gelagert ist und daß der Klemmabschnitt (36) ebenfalls an der Sitzschale (12) ausgebildet ist.

5. Kindersicherheitssitz nach einem der Ansprüche 1 bis 4, dadurch gekennzeichnet, daß das Klemmelement (34) eine Verriegelungsvorrichtung (70,76) zum selbsttägigen Verriegeln in der Klemmposition aufweist, wobei die Verriegelungsvorrichtung (70,76) ein Verriegelungsteil (70) und ein manuell betätigbares Löseteil (84) zum Entriegeln des Verriegelungsteils (70) aufweist.

6. Kindersicherheitssitz nach einem der Ansprüche 1 bis 5, dadurch gekennzeichnet, daß das Klemmelement (34) mit einer Rückstellvorrichtung (94) zum Zurückbewegen oder zumindest zum Unterstützen einer Zurückbewegung des Klemmelementes (34) aus der Klemmposition in die Freigabeposition aufweist.

7. Kindersicherheitssitz nach Anspruch 6, dadurch gekennzeichnet, daß die Rückstellvorrichtung eine Feder (94) ist, die sich bei Bewegung des Klemmelementes (34) in die Klemmposition spannt.

8. Kindersicherheitssitz nach Anspruch 7, dadurch gekennzeichnet, daß die Feder (94) als an dem Klemmelement (34) gehaltenes U-förmig gebogenes elastisches Federelement mit zwei Schenkeln (96,98) ausgebildet ist und daß einer der beiden Schenkel (98) beim Bewegen des Klemmelementes (34) in die Klemmposition mit seinem Ende (100) auf einer feststehenden Schrägfläche (102) gleitet und sich dabei unter Erzeugung einer Rückstellkraft spreizt.

9. Kindersicherheitssitz nach einem der Ansprüche 1 bis 8, dadurch gekennzeichnet, daß an der rückwärtigen Seite der Sitzschale (12) mindestens ein mit der Sitzschale (12) verbundener Bügel (20) vorgesehen ist, wobei zwischen dem Bügel (20) und der Sitzschale (12) sowohl der Schultergurt (26) als auch der Beckengurt (28) eines Dreipunkt-Anschnallgurtes (26,28) eines Fahrzeuges hindurchführbar sind.

10. Kindersicherheitssitz nach Anspruch 9, dadurch gekennzeichnet, daß das Klemmelement (34) an der rückwärtigen Seite der Sitzschale (12) linear verschiebbar geführt ist und daß der Klemmabschnitt (36) an der der rückwärtigen Seite der Sitzschale (12) zugewandten Innenseite (40) des mindestens einen Bügels (20) angeordnet ist.

11. Kindersicherheitssitz, insbesondere nach einem der Ansprüche 1 bis 10, mit
- einem Sockel (14) und
- einer eine Rückenlehne (22) und einen Schalenteil (18) aufweisenden Sitzschale (12) , die mit dem Sockel (14) verbunden ist,
**dadurch gekennzeichnet,**
- daß an der rückwärtigen Seite der Sitzschale (12) mindestens ein mit der Sitzschale (12) verbundener Bügel (20) vorgesehen ist, wobei zwischen dem Bügel (20) und der Sitzschale (12) sowohl der Schultergurt (26) als auch der Beckengurt (28) eines Dreipunkt-Anschnallgurtes (26,28) eines Fahrzeuges hindurchführbar sind,
- daß der mit dem mindestens einen Bügel (20) versehene Bereich der Rückenlehne (22) als von dem Schalenteil (18) separates Teil (16) ausgebildet ist, daß mit dem Schalenteil (18) unverlierbar verbindbar ist.

12. Kindersicherheitssitz nach Anspruch 11, dadurch gekennzeichnet, daß an dem mindestens einen Bügel (20) Führungselemente (30,60) zum Führen von Schulter- und Beckengurt (26,28) vorgesehen sind.

13. Kindersicherheitssitz, insbesondere nach einem der Ansprüche 1 bis 12, mit
- einem Sockel (14),
- einer Sitzschale (12) und
- einem Bezug (104) für die Sitzschale (12),
**dadurch gekennzeichnet,**
- daß am Rand der Sitzschale (12) mehrere zum Rand hin offene schmale Aussparungen (114) vorgesehen sind und
- daß der Bezug (104) an seinem auf dem Rand der Sitzschale (12) aufliegenden Rand von diesem abstehende Einhängeelemente (108) aufweist, die zum Festlegen des Bezuges (104) an der Sitzschale (12) in die Aussparungen (114) einschiebbar sind.

14. Kindersicherheitssitz nach Anspruch 13, dadurch gekennzeichnet, daß die Einhängeelemente (108) ein verdicktes freies Ende (112) aufweisen.

15. Kindersicherheitssitz nach Anspruch 13 oder 14, dadurch gekennzeichnet, daß die freien Ende (112) der Einhängeelemente (108) jeweils mit einem Keder versehen sind.

16. Kindersicherheitssitz, insbesondere nach einem der Ansprüche 1 bis 15, mit
- einem Sockel (14) und
- einer Sitzschale (12), die mit dem Sockel (14) verbunden ist,
**dadurch gekennzeichnet,**
- daß der Sockel (14) als dreidimensionaler Körper mit einer Oberseitenwand (14a), einer Unterseitenwand (14b) und diese verbindenden Vorder-, Rück- sowie zwei Seitenwänden (14c-14f) ausgebildet ist,
- daß der Sockel zu mindestens in den Übergangskantenbereichen zwischen der Unterseitenwand (14b) und den Vorder-, Rück- sowie Seitenwänden (14c-14f) abgerundet ist und
- daß die Übergangskantenbereiche zwischen der Unterseitenwand (14b) und den beiden Seitenwänden (14e,14f) in ihren mittleren Abschnitten zurückgezogen sind.
